# EUROPEAN PATENT APPLICATION

(11) **EP 4 574 910 A1**
(43) Date of publication of application: **25.06.2025**
(21) Application number: 23865280.4
(22) Date of filing: 30.08.2023
(51) Int. Cl.: C08L 83/07, B32B 27/00, C08K 5/5415, C08L 83/05, C09J 7/38, C09J 183/05, C09J 183/07, G02B 5/30

(54) **CURABLE SILICONE COMPOSITION, CURED PRODUCT THEREOF, LAYERED BODY, AND OPTICAL DEVICE OR OPTICAL DISPLAY**

(30) Priority: 12.09.2022 JP 2022144562
(71) Applicant: Dow Toray Co., Ltd., Tokyo 140-8617 (JP)
(72) Inventor: KIKUNAGA, Sayuri, Ichihara-shi Chiba 299-0108 (JP); SUGIE, Atsushi, Ichihara-shi Chiba 299-0108 (JP)
(74) Representative: Murgitroyd & Company
(86) International application number: PCT/JP2023/031357
(87) International publication number: WO 2024/057924

(57) **Abstract**

[Problem]

To provide a curable silicone composition which is ultraviolet light delay curable, is transparent, shows little yellowing even under high temperature conditions, and which can show high adhesive strength even to substrates that show reduced adhesive strength/difficulty in adhesion, such as polarizing plates having a hard coat layer on the surface, and uses thereof.

**SOLUTION**

A curable silicone composition, containing: (A) an organopolysiloxane having an alkenyl group; (B) (b1) a linear polysiloxane having SiH at terminals of the molecular chain, and (b2) a polysiloxane having three or more silicon bonded hydrogen atoms; (C) one or more types of compounds selected from (c1) compounds having two or more alkoxysilyl groups in one molecule, and (c2) organic compounds having an alkoxysilyl group and an epoxy group in one molecule; and (D) a photoactive platinum group metal catalyst; the composition having a SiH/Vi ratio of 1 or more and a platinum content in component (D) of 15 ppm or less, calculated as solid fractions, as well as uses thereof.

## Description

### TECHNICAL FIELD

The present invention is related to a curable silicone composition, cured product thereof, laminate body, and optical device or optical display.

### BACKGROUND ART

Curable silicone compositions with high transparency and high elongation of a cured product are used as adhesives or pressure sensitive adhesives for improving the visibility of an optical display. An optical display must use thermally unstable materials such as liquid crystals, organic electroluminescence, and other display units, as well as touch panels, cover lenses, and other display forming members. Therefore, the curable silicone composition that is used must be cured at relatively low temperatures. Furthermore, in recent years, from the perspective of energy conservation, compositions that do not require a heating step and that cure by ultraviolet light irradiation have been attracting attention.

However, in many cases, a decorative part is provided around the periphery of the display, and in the case of an ultraviolet light curable composition, there is a problem that portions where ultraviolet light does not penetrate are not properly cured. Low-temperature or room-temperature curing silicone compositions that do not require ultraviolet light irradiation are a solution. For example, Reference 1 proposes a curable silicone composition including an alkenyl group-containing polyorganosiloxane, a silicon-bonded hydrogen atom-containing organopolysiloxane, an alkoxysilyl group-containing organic compound, and a platinum catalyst. However, in the case of low-temperature or room-temperature curing silicone compositions, curing proceeds immediately upon mixing, which places limitations on the process. Another problem is that cleaning a device in which mixed liquid remains is difficult.

Therefore, an ultraviolet light delayed curing composition which uses a catalyst that is activated by irradiation with ultraviolet light has been proposed. In the case of an ultraviolet light delayed curing composition, curing proceeds even in areas where ultraviolet light does not penetrate after the catalyst is activated. **The** composition remains liquid and stable until exposed to ultraviolet light. Reference 2 proposes an ultraviolet light curable silicone rubber composition including an alkenyl group-containing polyorganosiloxane, a silicon-bonded hydrogen atom-containing organopolysiloxane, and a platinum group metal catalyst that is activated by light with a wavelength of 200 to 500 nm. However, a relatively large amount of platinum catalyst is required to cure the resin using only ultraviolet light. A large amount of platinum catalyst can cause yellowing over time, and is therefore undesirable as an adhesive for the display portion of an optical display. Hereinafter, compositions containing a platinum catalyst that is activated by ultraviolet light are referred to as ultraviolet light delayed curing compositions.

On the other hand, conventional ultraviolet light delayed curing compositions have a problem with poor adhesion due to the hard coat on a polarizing plate used as an optical member. In other words, unlike substrates that are relatively easy to adhere, such as glass, polarizing plates are often provided with a hard coat layer of an acrylic resin or the like. When an ultraviolet light curable composition is used for such a polarizing plate, poor curing after ultraviolet light irradiation is likely to occur, and the adhesive strength to the polarizing plate may be significantly reduced. For this reason, there is strong demand for an ultraviolet light delayed curing composition that achieves sufficient adhesion not only to glass and the like, but also to polarizing plates and the like provided with a hard coat layer, particularly as an OCR or adhesive layer used in an optical display or the like.

### RELATED ART DOCUMENTS

### PATENT DOCUMENTS

Patent Document 1: International Patent Application Publication WO 2020/080348
Patent Document 2: Japanese Unexamined Patent Application 2019-218495

### SUMMARY OF THE INVENTION

### PROBLEM TO BE SOLVED BY THE INVENTION

Accordingly, there has been demand for curable silicone compositions for use as adhesives or pressure sensitive adhesives for optical displays, touch panels, and the like that have excellent optical properties and delayed ultraviolet light curing properties, and that also exhibit excellent adhesive strength even to poorly adhesive substrates such as polarizing plates equipped with a hard coat layer. Furthermore, with regard to optical properties, the composition is required to have excellent optical stability, with little yellowing even when exposed to high temperatures after curing.

In light of the foregoing, an object of the present invention is to provide a curable silicone composition that exhibits excellent performance when used as a component that requires transparency, such as an optical display or touch panel, as well as a cured product thereof, a laminate body, and an optical device or optical display. Specifically, an object is to provide a curable silicone composition which is ultraviolet light curable and capable of exhibiting high adhesive strength similar to that of glass, even toward substrates which exhibit reduced adhesive strength or poor adhesion due to curing inhibition after ultraviolet light irradiation, such as polarizing plates having a hard coat layer on the surface, and which also exhibits little yellowing even under high temperature conditions. Another object is to provide uses for the cured product thereof, particularly laminate bodies, optical devices, optical displays, and the like, which contain the cured product.

### MEANS FOR SOLVING THE PROBLEM

As a result of conducting diligent research on the problem described above, the present inventors arrived at the present invention. In other words, an object of the present invention is achieved by
a curable silicone composition, containing:
(A) an organopolysiloxane having at least 2 alkenyl groups having 2 to 12 carbon atoms per molecule;
(B) the following components (b1) and (b2):
   (b1) a linear organohydrogenpolysiloxane having a silicon-bonded hydrogen atom at both ends of a molecular chain;
   (b2) an organohydrogenpolysiloxane having at least three silicon-bonded hydrogen atoms per molecule;
(C) one or more compounds selected from
   (c1) organic compounds having two or more alkoxysilyl groups in one molecule, and
   (c2) organic compounds having an alkoxysilyl group and an epoxy group in one molecule; and
(D) a platinum group metal catalyst activated by light having a wavelength of 200 to 500 nm,
   wherein the amount of component (B) is such that the amount of silicon-bonded hydrogen atoms in component (B) is 1 mol or more per mole of aliphatic unsaturated carbon-carbon bonds in component (A); and
   the amount of platinum atoms in component (D) is in a range of 15 ppm or less relative to the sum of the components that form the non-volatile solid fraction as a result of the curing reaction of the curable silicone composition.

The amount of component (C) is preferably in a range of 0.01 to 5 mass% relative to the total amount of the curable silicone composition.

The amount of component (b1) is preferably 60 mass% or more based on the sum of components (b1) and (b2), and component (b2) is preferably used in combination in an amount of 60 to 99 mass%.

Component (A) contains the following component (a1) and may contain component (a2):
(a1) a straight chain or partially branched organopolysiloxane having in a molecule at least 2 alkenyl groups with 2 to 12 carbon atoms; and
(a2) an organopolysiloxane having an alkenyl group, as expressed by average unit formula: (R¹₃SiO_{1/2})ₐ(R¹₂SiO_{2/2})_{b}(R¹SiO_{3/2})_{c}(SiO_{4/2})_{d}
(where R¹ independently represents a monovalent hydrocarbon group with 1 to 12 carbon atoms, at least 1 mol% of R¹ is an alkenyl group with 2 to 12 carbon atoms, and a, b, c, and d satisfy all of the following conditions: a + b + c + d = 1, 0 ≤ a ≤ 0.8, 0 ≤ b ≤ 0.4, 0 ≤ c ≤ 0.8, 0 ≤ d ≤ 0.6, 0.2 ≤ c + d ≤ 0.8); and
component (B) preferably contains the following components (b1) and (b2):
   (b1) a straight chain organohydrogenpolysiloxane having a silicon-bonded hydrogen atom on an end of a molecular chain; and
   (b2) an organohydrogenpolysiloxane having at least 3 silicon atom bonded hydrogen atoms, particularly preferably as expressed by average unit formula:

      (R²₃SiO_{1/2})ₑ(R²₂SiO_{2/2})_{f}(R²SiO_{3/2})_{g}(SiO_{4/2})ₕ

      (where R² independently represent a hydrogen atom or a monovalent hydrocarbon group with 1 to 12 carbon atoms excluding an alkenyl group, at least 1 mol% of R² is a hydrogen atom, and e, f, g, and h satisfy all of the following conditions: e + f + g + h = 1, 0 ≤ e ≤ 0.8, 0 ≤ f ≤ 0.4, 0 ≤ g ≤ 0.7, 0 ≤ h ≤ 0.5, 0.2 ≤ g + h ≤ 0.7)

The viscosity of the composition at 25°C before exposure to ultraviolet light is preferably 100000 mPa or less.

The curable silicone composition of the present invention is preferably an optical adhesive or an optical pressure sensitive adhesive.

The amount of component (B) is such that the amount of silicon-bonded hydrogen atoms in component (B) is preferably 1 mol or more and 4 mol or less per mole of aliphatic unsaturated carbon-carbon bonds in component (A).

The present invention also relates to a cured product of the curable silicone composition of the present invention.

The cured product of the curable silicone composition of the present invention preferably has a degree of needle penetration at 25°C within a range of 5 to 70.

The present invention also relates to a laminate body containing an adhesive layer containing the cured product of the present invention, disposed between a first transparent or non-transparent optical member and a second transparent or non-transparent optical member.

Furthermore, the present invention also relates to an optical device, containing: a substrate; an optical element disposed on the substrate; and the cured product of the present invention that seals at least a portion of the optical element.

Furthermore, the present invention also relates to an optical display containing the laminate body of the present invention.

### EFFECT OF THE INVENTION

The ultraviolet light curable silicone composition of the present invention has high transparency and excellent adhesive strength after curing to glass and polarizing plates which are difficult to adhere to, and is therefore useful for use as an adhesive or a pressure sensitive adhesive for an optical display or touch panel. Furthermore, the degree of yellowing is small even under high temperature conditions, so an optical device or optical display having excellent optical stability over time can be provided.

### DESCRIPTION OF THE PREFERRED EMBODIMENTS

### [Curable Silicone Composition]

First, the ultraviolet light curable silicone composition of the present invention (hereinafter, also referred to as the "present composition") will be described below in detail.

Component (A) is an organopolysiloxane having in each molecule at least 2 alkenyl groups with 2 to 12 carbon atoms. Preferable examples of the alkenyl group in component (A) include vinyl groups, allyl groups, butenyl groups, pentenyl groups, hexenyl groups, heptenyl groups, octenyl groups, nonenyl groups, decenyl groups, undecenyl groups, and dodecenyl groups. Vinyl groups, allyl groups, hexenyl groups, and octenyl groups are preferable from the perspective of economic efficiency and reactivity.

Furthermore, examples of other groups that are bonded to a silicon atom in component (A) include: methyl groups, ethyl groups, propyl groups, butyl groups, pentyl groups, hexyl groups, heptyl groups, octyl groups, nonyl groups, decyl groups, undecyl groups, dodecyl groups, and other alkyl groups having 1 to 12 carbon atoms; benzyl groups, phenethyl groups, and other aralkyl groups having 7 to 12 carbon atoms; 3-chloropropyl groups, 3,3,3-trifluoropropyl groups, and other halogen-substituted alkyl groups having 1 to 12 carbon atoms; phenyl groups, tolyl groups, xylyl groups, and other aryl groups having 6 to 20 carbon atoms; and groups in which some or all hydrogen atoms of the aforementioned groups are substituted with a fluorine atom, chlorine atom, bromine atom, or other halogen atom. Methyl groups are preferable from the perspective of economic efficiency and heat resistance. Furthermore, the silicon atom in component (A) may be bonded to a small amount of hydroxyl groups or alkoxy groups such as methoxy groups, ethoxy groups, n-propoxy groups, i-propoxy groups, n-butoxy groups, sec-butoxy groups, tert-butoxy groups, and the like so long as an object of the present invention is not impaired.

While the molecular structure of component (A) is not particularly limited, examples thereof include straight chain structures, partially branched straight chain structures, branched structures, cyclic structures, and three-dimensional mesh structures. Component (A) may be a single organopolysiloxane having these molecular structures or a mixture of two or more organopolysiloxanes having these molecular structures.

Preferably, component (A) contains at least component (a1) and may contain component (a2):
(a1) a linear or partially branched organopolysiloxane having at least 2 alkenyl groups with 2 to 12 carbon atoms in a molecule; and
(a2) an organopolysiloxane having an alkenyl group expressed by average unit formula:

   (R¹₃SiO_{1/2})ₐ(R¹₂SiO_{2/2})_{b}(R¹SiO_{3/2})_{c}(SiO_{4/2})_{d}
(where R¹ independently represents a monovalent hydrocarbon group with 1 to 12 carbon atoms, at least 1 mol% of R¹ is an alkenyl group with 2 to 12 carbon atoms, and a, b, c, and d satisfy all of the following conditions: (a + b + c + d = 1, 0 ≤ a ≤ 0.8, 0 ≤ b ≤ 0.4, 0 ≤ c ≤ 0.8, 0 ≤ d ≤ 0.6, 0.2 ≤ c + d ≤ 0.8).

Examples of components (a1) include a dimethylpolysiloxane blocked with dimethylvinylsiloxy groups at both ends of a molecular chain, dimethylpolysiloxane blocked with diphenylvinylsiloxy groups at both ends of a molecular chain, dimethylsiloxane-methylphenylsiloxane copolymer blocked with dimethylvinylsiloxy groups at both ends of a molecular chain, dimethylsiloxane-diphenylsiloxane copolymer blocked with dimethylvinylsiloxy groups at both ends of a molecular chain, dimethylsiloxane-methylphenylsiloxane copolymer blocked with diphenylvinylsiloxy groups at both ends of a molecular chain, dimethylsiloxane-methylvinylsiloxane copolymer blocked with dimethylvinylsiloxy groups at both ends of a molecular chain, dimethylsiloxane-methylphenylsiloxane-methylvinylsiloxane copolymer blocked with dimethylvinylsiloxy groups at both ends of a molecular chain, dimethylsiloxane-diphenylsiloxane-methylvinylsiloxane copolymer blocked with dimethylvinylsiloxy groups at both ends of a molecular chain, methylvinylpolysiloxane blocked with trimethylsiloxy groups at both ends of a molecular chain, methylvinylsiloxane-methylphenylsiloxane copolymer blocked with trimethylsiloxy groups at both ends of a molecular chain, methylvinylsiloxane-diphenylsiloxane copolymer blocked with trimethylsiloxy groups at both ends of a molecular chain, dimethylsiloxane-methylvinylsiloxane copolymer blocked with trimethylsiloxy groups at both ends of a molecular chain, a partially branched polydimethylsiloxane blocked with a dimethylvinylsiloxy group at both ends of a molecular chain, containing a methylsilsesquioxane unit (T unit), a polydimethylsiloxane blocked with a dimethylvinylsiloxy group at both ends of a molecular chain, containing a silica unit (Q unit), and mixtures of two or more of these organopolysiloxanes.

In the formula of component (a2), R¹ independently represents a monovalent hydrocarbon group having 1 to 12 carbon atoms, and examples include alkyl groups, alkenyl groups, aryl groups, aralkyl groups, and groups in which some or all of the hydrogen atoms of the aforementioned groups are substituted with a fluorine atom, a chlorine atom, a bromine atom, or other halogen atom. However, at least 1 mol% of R¹ is an alkenyl group having 2 to 12 carbon atoms.

Examples of component (a2) include tetrakis(dimethylvinylsiloxy)silane, hexa(dimethylvinylsiloxy)disiloxane, and organopolysiloxane resins as expressed by the following average unit formulae:

(ViMe₂SiO_{1/2})_{0.1}(Me₃SiO_{1/2})_{0.4}(SiO_{4/2})_{0.5}

(ViMe₂SiO_{1/2})_{0.1}(Me₃SiO_{1/2})_{0.5}(SiO_{4/2})_{0.4}

(ViMe₂SiO_{1/2})_{0.05}(Me₃SiO_{1/2})_{0.55}(SiO_{4/2})_{0.4}

(ViMe₂SiO_{1/2})_{0.1}(Me₃SiO_{1/2})_{0.4}(PhSiO_{3/2})_{0.1}(SiO_{4/2})_{0.4}

(ViMe₂SiO_{1/2})_{0.046}(Me₃SiO_{1/2})_{0.394}(SiO_{4/2})_{0.56}

(ViMe₂SiO_{1/2})_{0.25}(PhSiO_{3/2})_{0.75}

Note that in the aforementioned formulae, Me represents a methyl group, Ph represents a phenyl group, and Vi represents a vinyl group.

The amount of component (a2) is within a range of 0 to 10.0 mass%, and preferably within a range of 0 to 5.0 mass% relative to the solid fraction of the curable silicone composition. Herein, solid fraction refers to the sum of components forming a non-volatile solid fraction by a curing reaction, and particularly includes components (A) to (D) and non-volatile optional components configuring the present composition.

Most preferably, component (A) is (a1) a linear or partially branched organopolysiloxane having at least two alkenyl groups having 2 to 12 carbon atoms per molecule, and particularly preferably, includes (a1-1) a linear organopolysiloxane having an alkenyl group with 2 to 12 carbon atoms at both molecular chain terminals. This component (a) imparts elongation and flexibility to the resulting cured product, and can provide excellent mechanical strength. Furthermore, a portion of component (A) may be the aforementioned component (a2), and by including T units or Q units, the mechanical strength, particularly hardness and toughness, of the cured product may be improved. On the other hand, if the amount of component (a2) is large, the curing rate of the composition after irradiation with ultraviolet light may be slow. Therefore, from the viewpoint of maintaining a practical curing rate, component (A) may and preferably does contain only component (a1) or component (a1-1). Furthermore, for the purpose of satisfying required properties such as hardness, component (A) may be include components (a1) and (a2) used in combination with a mass ratio of, for example, 100:0 to 80:20, thereby improving the mechanical strength of the resulting cured product while maintaining a practical curing rate.

Furthermore, the viscosity (total viscosity if a mixture) of component (A) at 25°C is not limited, but the viscosity is preferably 100000 mPa·s or less, within a range of 100 to 100000 mPa·s, within a range of 100 to 50000 mPa·s, or within a range of 100 to 10000 mPa·s. This is because, if the viscosity of component (A), and particularly component (a1) is above the lower limit of the aforementioned range, the mechanical properties of the cured product obtained will be enhanced, but on the other hand, if the viscosity is below the upper limit of the aforementioned range, the handleability of the composition obtained will be enhanced.

Component (B) is an organopolysiloxane having at least two silicon-bonded hydrogen atoms per molecule. Examples of groups that are bonded to a silicon atom other than silicon-bonded hydrogen atoms in component (B) include: alkyl groups with 1 to 12 carbon atoms such as methyl groups, ethyl groups, propyl groups, butyl groups, pentyl groups, hexyl groups, heptyl groups, octyl groups, nonyl groups, decyl groups, undecyl groups, dodecyl groups, and the like; aryl groups with 6 to 20 carbon atoms such as phenyl groups, tolyl groups, xylyl groups, and the like; aralkyl groups with 7 to 20 carbon atoms such as benzyl groups, phenethyl groups, and the like; and halogen substituted alkyl groups with 1 to 12 carbon atoms such as 3-chloropropyl groups, 3,3,3-trifluoropropyl groups, and the like. Methyl groups and phenyl groups are preferable from the perspective of economic efficiency and heat resistance. Furthermore, the silicon atom in component (B) may be bonded to a small amount of hydroxyl groups or alkoxy groups such as methoxy groups, ethoxy groups, n-propoxy groups, i-propoxy groups, n-butoxy groups, sec-butoxy groups, tert-butoxy groups, and the like so long as an object of the present invention is not impaired.

Component (B) contains the following component (b1) and (b2):
(b1) a linear organohydrogenpolysiloxane having silicon-bonded hydrogen atoms only at both ends of the molecular chain; and
(b2) an organohydrogenpolysiloxane having at least 3 silicon atom bonded hydrogen atoms, (b2) in particular being expressed by the following average unit formula:

   (R²₃SiO_{1/2})ₑ(R²₂SiO_{2/2})_{f}(R²SiO_{3/2})_{g}(SiO_{4/2})ₕ
(where R² independently represents a hydrogen atom or a monovalent hydrocarbon group with 1 to 12 carbon atoms, excluding alkenyl groups, at least 1 mol% of R² is a hydrogen atom, and e, f, g, and h satisfy all of the following conditions: e + f + g + h = 1, 0 ≤ e ≤ 0.8, 0 ≤ f ≤ 0.4, 0 ≤ g ≤ 0.7, 0 ≤ h ≤ 0.5, 0.2 ≤ g + h ≤ 0.7)

Component (B) of the present invention is a combination of components (b1) and (b2), and the amount of component (b1) used is preferably 60 mass% or more, more preferably in a range of 60 to 99 mass%, and even more preferably in a range of 80 to 98 mass%, based on the sum of components (b1) and (b2). In other words, the main part of component (B) is component (b1) which is a chain extender, and by combining this with a small amount of component (b2), the flexibility and mechanical strength of the cured reaction product, as well as the adhesion to various substrate, can be improved more efficiently.

Component (b1) is a straight chain or partially branched organohydrogenpolysiloxane having a silicon-bonded hydrogen atom at both ends of the molecular chain, which is a component that functions as a chain length extender in a hydrosilylation reaction with component (A) and improves the flexibility of the curing reactant.

Examples of component (b1) include 1,1,3,3-tetramethyldisiloxane, tris(dimethylhydrogensiloxy) methylsilane, bis(dimethylhydrogensiloxy) diphenylsilane, dimethylpolysiloxane blocked with dimethylhydrogensiloxy groups at both ends of a molecular chain, a partially branched polydimethylsiloxane blocked with dimethylhydrogensiloxy groups at both ends of a molecular chain containing a methylsilsesquioxane unit (T unit), a partially branched polydimethylsiloxane blocked with dimethylhydrogensiloxy groups at both ends of a molecular chain containing a silica unit (Q unit), and mixtures of two or more types of these organopolysiloxanes. Component (b1) may have a silicon-bonded hydrogen atom in the side chain, but is particularly preferably a linear organohydrogenpolysiloxane having silicon-bonded hydrogen atoms only at both molecular chain terminals. An example is dimethylpolysiloxane that is terminally blocked with dimethylhydrogensiloxy groups and has a degree of siloxane polymerization in a range of 2 to 100, and particularly preferably in a range of 2 to 50.

In the average unit formula of component (b2), R² independently represents a hydrogen atom or a monovalent hydrocarbon group having 1 to 12 carbon atoms excluding an alkenyl group, and examples include alkyl groups, aryl groups, aralkyl groups, and groups in which a portion or all of hydrogen atoms of the aforementioned groups are substituted with a fluorine atom, a chlorine atom, a bromine atom, or other halogen atom. However, at least 1 mol% of R² is a hydrogen atom.

Examples of components (b2) include tetrakis(dimethylhydrogen siloxy) silane, hexa(dimethylhydrogensiloxy) disiloxane, tris(dimethylhydrogensiloxy) phenylsilane, and organopolysiloxane resins as expressed by the following average unit formulae:

(HMe₂SiO_{1/2})_{0.6}(SiO_{4/2})_{0.4}

(HMe₂SiO_{1/2})_{0.3}(Me₃SiO_{1/2})_{0.3}(SiO_{4/2})_{0.4}

(HMe₂SiO_{1/2})_{0.5}(Me₃SiO_{1/2})_{0.05}(SiO_{4/2})_{0.4}

(HMe₂SiO_{1/2})_{0.5}(PhSiO_{3/2})_{0.1}(SiO_{4/2})_{0.4}

(HMe₂SiO_{1/2})_{0.6}(PhSiO_{3/2})_{0.4}

(HMe₂SiO_{1/2})_{0.75}(PhSiO_{3/2})_{0.25}

Note that in the aforementioned formulae, Me represents a methyl group and Ph represents a phenyl group.

The amount of component (b2) is preferably within a range of 0.001 to 2.0 mass%, and preferably within a range of 0.01 to 1.0 mass%, relative to the solid fraction of the curable silicone composition. Herein, solid fraction refers to the sum of components forming a non-volatile solid fraction by a curing reaction, and particularly includes components (A) to (D) and non-volatile optional components configuring the present composition.

Although the viscosity (total viscosity if a mixture) of component (B) at 25°C is not limited, the viscosity is preferably 10000 mPa·s or less, within a range of 1 to 1000 mPa·s, or within a range of 1 to 500 mPa·s. This is because if the viscosity of component (B) is above the lower limit of the aforementioned range, the mechanical properties of an obtained cured product are enhanced. However, on the other hand, if the viscosity is below the upper limit of the aforementioned range, the transparency and handleability of an obtained composition are enhanced.

The amount of component (B) included is an amount such that there is 1 mol or more of silicon-bonded hydrogen atoms in component (B) per mole of aliphatic unsaturated carbon-carbon bonds in component (A), preferably an amount of 1 mol or more and 4 mol or less, and more preferably an amount in a range of 1 to 2 mol, or any amount within the range between these upper and lower limits. This is because when the amount of component (B) is equal to or greater than the lower limit of the above range, the resulting composition exhibits sufficient adhesive strength for practical use even to poorly adhesive substrates such as polarizing plates provided with a hard coat layer, so long as component (B) is used in combination with the specific component (C) described below. On the other hand, when the amount is equal to or less than the upper limit of the above range, there is an advantage that the mechanical properties of the obtained cured product are likely to be improved. Incidentally, the ratio of the amount (number of moles) of silicon-bonded hydrogen atoms in component (B) to 1 mol of aliphatic unsaturated carbon-carbon bonds in component (A) is referred to simply as "SiH/Vi ratio".

In the present invention, the problem of curing inhibition even to poorly adhesive substrates such as polarizing plates having a hard coat layer can be effectively solved by selecting the aforementioned components (A) and (B) and component (C) having a specific structure described below, and particularly by satisfying a prescribed range of the SiH/Vi ratio, and thus excellent adhesive strength can be achieved. On the other hand, if the aforementioned range of the SiH/Vi ratio is not satisfied or if component (C) is not used in combination, the adhesive strength to a polarizing plate or the like having a hard coat layer will decrease, and the technical effects of the present invention might not be achieved.

Component (C) includes one or more compounds selected from (c1) a compound having two or more alkoxysilyl groups in one molecule, and (c2) an organic compound having an alkoxysilyl group and an epoxy group in one molecule, and component (c1), component (c2), or a mixture of these may be used. Component (C) acts as an adhesion promoter that improves the adhesive strength of components (A) and (B) and of the present composition. Examples of the alkoxysilyl group include trimethoxysilyl groups, methyldimethoxysilyl groups, triethoxysilyl groups, methyldiethoxysilyl groups, and triisopropoxysilyl groups.

Specifically, component (C) may be (c1) an organic compound having two or more alkoxysilyl groups at the molecular chain terminals. Furthermore, the organic compound herein includes: organic silicon compounds in addition to alkane compounds and the like. Specific examples of component (c1) include 1,2-bis(trimethoxysilyl) ethane, 1,2-bis(triethoxysilyl) ethane, 1,2-bis(methyldimethoxysilyl) ethane, 1,2-bis(methyldiethoxysilyl) ethane, 1,3-bis(trimethoxysilyl) propane, 1,4-bis(trimethoxysilyl) butane, 1,4-bis(triethoxysilyl) butane, 1-methyldimethoxysilyl-4-trimethoxysilylbutane, 1-methyldiethoxysilyl-4-triethoxysilylbutane, 1,4-bis(methyldimethoxysilyl) butane, 1,4-bis(methyldiethoxysilyl) butane, 1,5-bis(trimethoxysilyl) pentane, 1,5-bis(triethoxysilyl) pentane, 1,4-bis(trimethoxysilyl) pentane, 1,4-bis(triethoxysilyl) pentane, 1-methyldimethoxysilyl-5-trimethoxysilylpentane, 1-methyldiethoxysilyl-5-triethoxysilylpentane, 1,5-bis(methyldimethoxysilyl) pentane, 1,5-bis(methyldiethoxysilyl) pentane, 1,6-bis(trimethoxysilyl) hexane, 1,6-bis(triethoxysilyl) hexane, 1,4-bis(trimethoxysilyl) hexane, 1,5-bis(trimethoxysilyl) hexane, 2,5-bis(trimethoxysilyl) hexane, 1-methyldimethoxysilyl-6-trimethoxysilylhexane, 1-phenyldiethoxysilyl-6-triethoxysilylhexane, 1,6-bis(methyldimethoxysilyl) hexane, 1,7-bis(trimethoxysilyl) heptane, 2,5-bis(trimethoxysilyl) heptane, 2,6-bis(trimethoxysilyl) heptane, 1,8-bis(trimethoxysilyl) octane, 1,8-bis(methyldimethoxysilyl) octane, 2,5-bis(trimethoxysilyl) octane, 2,7-bis(trimethoxysilyl) octane, 1,9-bis(trimethoxysilyl) nonane, 2,7-bis(trimethoxysilyl) nonane, 1,10-bis(trimethoxysilyl) decane, 3,8-bis(trimethoxysilyl) decane, and other alkane compounds having two alkoxysilyl groups, 1,3-bis{2-(trimethoxysilyl) ethyl}-1,1,3,3-tetramethyldisiloxane, 1,3-bis{2-(methyldimethoxysilyl) ethyl}-1,1,3,3-tetramethyldisiloxane, 1,3-bis{2-(triethoxysilyl) ethyl}-1,1,3,3-tetramethyldisiloxane, 1,3-bis{2-(methyldiethoxysilyl) ethyl}-1,1,3,3-tetramethyldisiloxane, 1,3-bis{6-(trimethoxysilyl) hexyl}-1,1,3,3-tetramethyldisiloxane, 1,3-bis{6-(triethoxysilyl) hexyl}-1,1,3,3-tetramethyldisiloxane, and other disiloxane compounds having two alkoxysilyl groups. Furthermore, examples of organic compounds having three alkoxysilyl groups include 1,3,5-tris{2-(trimethoxysilyl) ethyl}-1,1,3,5,5-pentamethyl trisiloxane, 1,3,5-tris{2-(methyldimethoxysilyl) ethyl}-1,1,3,5,5-tetramethyldisiloxane, 1,3,5-tris{2-(triethoxysilyl) ethyl}-1,1,3,5,5-tetramethyldisiloxane, 1,3,5-tris{2-(methyldiethoxysilyl) ethyl}-1,1,3,5,5-tetramethyl disiloxane, 1,3,5-tris{6-(trimethoxysilyl) hexyl}-1,1,3,5,5-tetramethyl disiloxane, and other trisiloxane compounds having three alkoxysilyl groups. An example of the structure is:

(MeO)₃SiCH₂CH₂(Me)₂Si-O-SiMe(CH₂CH₂Si(OMe)₃)-O-Si(Me)₂CH₂CH₂Si(OMe)₃

(where Me represents a methyl group).

Similarly, component (C) may be (c2) a compound having an alkoxysilyl group and an epoxy group in one molecule. Specific examples of component (c2) include 3-glycidoxypropyl trimethoxysilane, 3-glycidoxypropyl methyldimethoxysilane, 3-glycidoxypropyl triethoxysilane, 3-glycidoxypropyl methyldiethoxysilane, 2-(3,4-epoxycyclohexyl) ethyl trimethoxysilane, 2-(3,4 - epoxycyclohexyl) ethyl methyldimethoxysilane, and 2-(3,4-epoxycyclohexyl) ethyl triethoxysilane.

In order to achieve the technical effects of the present invention, the type of component (C) as well as the aforementioned components (A) and (B) and the SiH/Vi values thereof must fall within the prescribed ranges. Simply adding an adhesion promoter can reduce the adhesive strength due to poor curing problems to poorly adhesive substrates such as polarizing plates provided with a hard coat layer. When an adhesion promoter other than the aforementioned component (C) is used, sufficient adhesive strength might not be obtained. In addition, compatibility with components (A) and (B) may decrease, the transparency of the obtained cured product may deteriorate, or yellowing may occur, making it impossible to achieve practical performance as an OCR or adhesive for optical components.

While not limited, the amount of component (C) is preferably within a range of 0.01 to 5 mass parts, or within a range of 0.01 to 3 mass parts, relative to 100 mass parts of the total of components (A) to (D) because curing properties and discoloration of the cured product are not induced.

Component (D) is a hydrosilylation catalyst that accelerates the curing of the composition, and is a platinum group metal catalyst that is activated by light with a wavelength of 200 to 500 nm.

The amount of component (D) is an amount that accelerates curing of the composition, and specifically, an amount such that the platinum atoms in the catalyst are in a range of 0.1 to 15 ppm by mass, preferably 5 to 15 ppm, relative to the composition. This is because, if the content of component (D) is above the lower limit of the aforementioned range, curing of the composition obtained sufficiently progresses; however, on the other hand, if the content is at the upper limit or lower of the aforementioned range, discoloration of the cured product obtained is less likely to occur. On the other hand, if the amount of component (D) used exceeds the above upper limit, the resulting cured product will be prone to coloration over time, causing problems such as yellowing, and may not achieve practical performance as an OCR or adhesive for optical components. In other words, the present invention enables solving the problem of poor curing on poorly adhesive substrates such as polarizing plates having a hard coat layer, not by simply increasing the amount of the catalyst (component (D)), but by using other components in combination and by using a prescribed SiH/Vi ratio.

Component (D) is a hydrosilylation reaction catalyst that is inactive unless irradiated with a high-energy beam having a wavelength of 200 to 500 nm, but becomes active when irradiated with a high-energy beam. Component (D) is a so-called ultraviolet light activated catalyst or high energy beam activated catalyst, which is well-known in the present technical field.

The irradiation dose of ultraviolet light varies depending on the type of ultraviolet light activated catalyst, but the integrated irradiation dose at a wavelength of 365 nm is preferably within a range of 100 mJ/cm² to 10 J/cm².

Specific examples of component (D) include trimethyl(methylcyclopentadienyl) platinum (IV), (cyclopentadienyl) trimethyl platinum (IV), (1,2,3,4,5-pentamethyl cyclopentadienyl) trimethyl platinum (IV), (cyclopentadienyl) dimethylethyl platinum (IV), (cyclopentadienyl) dimethylacetyl platinum (IV), (trimethylsilyl cyclopentadienyl) trimethyl platinum (IV), (methoxycarbonyl cyclopentadienyl) trimethyl platinum (IV), (dimethylsilyl cyclopentadienyl) trimethylcyclopentadienyl platinum (IV), trimethyl (acetylacetonato) platinum (IV), trimethyl (3,5-heptanedionate) platinum (IV), trimethyl (methylacetoacetate) platinum (IV), bis(2,4-pentanedionato) platinum (II), bis(2,4-hexanedionato) platinum (II), bis(2,4-heptanedionato) platinum (II), bis(3,5-heptanedionato) platinum (II), bis(1 - phenyl-1,3-butanedionato) platinum (II), bis(1,3-diphenyl-1,3-propanedionato) platinum (II), and bis(hexafluoroacetylacetonato) platinum (II). Of these, (methylcyclopentadienyl) trimethyl platinum (IV) and bis(2,4-pentanedionato) platinum (II) are preferred from the perspective of versatility and ease of acquisition.

Component (D) may optionally contain a hydrosilylation reaction catalyst that is active without exposure to ultraviolet light.

Furthermore, so long as an object of the present invention is not impaired, if necessary, the present composition may contain conventionally known additives including: metal oxide fine powder such as fumed silica, wet silica, and the like; an alkenyl group-containing low molecular weight siloxane as a reactive diluent such as 1,1,3,3-tetramethyl-1,3-divinyldisiloxane, 1,3,5,7-tetramethyl-1,3,5,7-tetravinylcyclotetrasiloxane, and the like; and a hindered phenol compound acting as a conservation stability improver such as 2,6-ditert-butyl-4-methylphenol, 2,6-ditert-butyl-4-hydroxymethylphenol, 2,6-bis(hydroxymethyl)-p-cresol, and the like, along with a heat-resistant improver such as N-nitrosophenylhydroxylamine aluminum salt and the like.

The present composition may suitably contain a non-reactive organopolysiloxane as a plasticizer or viscosity modifier of the cured product. Specific examples include straight chain or branched organopolysiloxanes and organopolysiloxane resins, which do not contain a functional group such as alkenyl groups and the like. Specifically, polydimethylsiloxane having a trimethylsiloxy group terminal is preferred. In particular, when the component is used, the hardness (degree of needle penetration) and fluidity (viscosity) in the cured or semi-cured state can be adjusted to a desired range.

Although the viscosity of the present composition at 25°C is not limited, the viscosity is preferably 100000 mPa·s or less, within a range of 100 to 100000 mPa·s, or within a range of 100 to 30,000 mPa·s. This is because, if the viscosity of the present composition is above the lower limit of the aforementioned range, the mechanical properties of the cured product obtained will be good; however, if, on the other hand, the viscosity is below the upper limit of the aforementioned range, the handleability of the composition obtained will be enhanced and air is less likely to be entrained in the cured product. Note that these viscosities can be measured by a rotational viscometer.

The present composition can be prepared by uniformly mixing components (A) to (D), and if necessary, any other components. When preparing the present composition, mixing can be performed at room temperature using various types of stirrers or kneaders, and if necessary, mixing can be performed while heating. Furthermore, the order of combining the various components is not restricted, and mixing can be performed in any order.

Moreover, the present composition can be a one part composition in which all of the components are blended in the same container, or can be a two part composition which mixes during use in view of storage stability.

**The** composition can be cured by exposure to ultraviolet light having a wavelength of 200 to 500 nm. **The** curing reaction rate of the present composition can be adjusted to the desired rate by changing the concentration of platinum catalyst in component (D), the amount of ultraviolet light exposure, or the weight ratio of components (A) and (B).

### [Use of the Present Composition]

The present composition is useful as various potting agents, sealants, and adhesives/pressure-sensitive adhesives, is preferably useful as an optical sealing agent, or optical pressure-sensitive adhesive/adhesive, and is particularly useful as an optical sealing agent or optical pressure-sensitive adhesive/adhesive for a display. The present composition cures by irradiation with a high-energy beam such as ultraviolet light even at low temperatures, and a cured product thereof has high elongation, excellent flexibility and adhesive strength, little coloration (yellowing) at high temperatures, and minimal clouding. Therefore, the composition is suitable as a material for forming an intermediate layer between an image display unit and a protective part of a display, and such usage may be referred to as optically elastic resin ("OCR (Optically Clear Resin)"). Furthermore, curing proceeds even without a heating step, so no additional heating step or the like is required for curing, and a process from mutual adhesion between members to curing and adhering by ultraviolet light irradiation can be shortened, making it suitable for energy-saving processes and improving industrial production efficiency.

The present composition can be used not only for liquid crystal displays but also for the display field in general, such as organic EL displays, electronic paper displays, plasma displays, and the like.

The present composition can be cured without a heating process, and thus can be applied as a coating of substrates with inferior heat resistance. The type of substrate is generally a transparent substrate such as glass, along with synthetic resin films, sheets, and transparent electrode coatings.

The coating method of the present composition is particularly limited, and examples include dispensing, gravure coating, microgravure coating, slit coating, slot die coating, screen printing, stencil printing, and comma coating. Note that when the present composition is used as an OCR for adhering members of optical displays and the like together, a resin member can be optionally formed in the form of a frame on a display module, a so-called dam material, or the present composition can be formed on an inner side without a dam and a front surface panel can be adhered thereon. Furthermore, depending on the site to be injected or arranged, a dispenser such as a syringe, a cartridge, or the like may be used to inject and fill the curable silicone composition according to the present invention, and the OCR may be arranged. These processes can and are preferably similar to the OCR arrangement or injection step disclosed in, for example, Patent Document 1 (International Patent Publication WO2020/080348).

The composition of the present invention can start curing by irradiating with ultraviolet light. As the ultraviolet light generating source, a high-pressure mercury lamp, a medium-pressure mercury lamp, a Xe-Hg lamp, a deep UV lamp, a UV-LED light source, or the like is suitable, and in particular, ultraviolet light irradiation with a wavelength of 280 to 405 nm, preferably with a wavelength of 300 to 405 nm is preferable, and a light source with a plurality of light emission bands may be used. Furthermore, when curing the composition of the present invention, the ultraviolet light may be irradiated directly onto the arranged composition, may be irradiated through a translucent member, or may be deep cured by irradiating ultraviolet light through gaps between members, and the irradiation form can be selected, as appropriate, on the basis of mutual adhesion and the curing process.

**The** amount of ultraviolet light irradiation for curing the composition of the present invention can be designed, as appropriate, according to the amount of coating, coating thickness, curing process, desired cycle time, and the like, but the cumulative light amount is 100 mJ/cm² to 20,000 mJ/cm², more preferably 1,000 mJ/cm² to 15,000 mJ/cm², and even more preferably 2,000 mJ/cm² to 10,000 mJ/cm².

### [Cured Product]

**The** cured product of the present invention (hereinafter, referred to as "the present cured product") is obtained by ultraviolet light delayed curing of the curable silicone composition described above.

**The** present composition is preferably used as an optically elastic resin ("OCR" (Optically Clear Resin)) having protection, sealing, adhesion/pressure-sensitive adhesion and other functions as described above, and is preferably cured to form an elastomeric (elastic) resin member or a gel-like resin member. **The** degree of needle penetration at 25°C as stipulated in JIS K2220 (hereinafter, simply referred to as the "degree of needle penetration") for the silicone resin member after curing is preferably within a range of 5 to 70. The degree of needle penetration is more preferably within a range of 10 to 60 or 10 to 50. The cured product (= silicone resin member) has moderate flexibility and durability, and has excellent adhesion/adhesion retention and followability between members, and thus can be used as a gap sealant composition for a display device to achieve a reliable sealing effect.

As a method of forming the present cured product, a film-like substrate, tape-like substrate, or sheet-like substrate can be coated with the present composition and then cured by ultraviolet light irradiation (preferably with the light source and irradiation amount described above), for example. Furthermore, an example includes a case in which the present composition is first arranged between two substrates and then cured with both substrates firmly bonded. There are also cases in which the present composition is smoothly applied to at least one surface of the substrate. Thereafter, both substrates are adhered together and cured by ultraviolet light irradiation to achieve a strong adhesion. While not limited thereto, the film thickness of this cured product is preferably 1 to 100,000 µm, more preferably 50 to 30,000 µm. Note that when the present cured product is formed between members, as described above, a resin member is optionally formed in the form of a frame on a display module, a so-called dam material, or the present composition is arranged on an inner side without a dam and a front surface panel can be adhered thereon, which may be and is preferably cured by ultraviolet light irradiation from a light-transmitting side that can be irradiated with ultraviolet light. A formation process of such a cured product can and is preferably similar the curing process after arrangement or injection disclosed in, for example, Patent Document 1 (International Patent Publication WO2020/080348).

### [Laminate]

The laminate body according to the present invention has a first optical member, a second optical member, and an adhesive layer containing the present cured product arranged between these two optical members. Herein, these optical members may be transparent or non-transparent, and one or both may be transparent depending on the desired structure and ultraviolet light irradiation process. A suitable laminate body, optical members used therein, and formation process for the laminate body are common, for example, with the laminate body and the like disclosed in Patent Document 1 (International Patent Publication WO2020/080348). Some or all of the composition and cured product used in the laminate body disclosed in Patent Document 1 can be replaced by the composition of the present invention or the present cured product and can be referred to as preferred embodiments in the present invention. In such a case, it goes without saying that curing of the composition in the present invention by ultraviolet light irradiation should be performed instead of or together with curing of the composition in Patent Document 1.

### [Optical Device]

An optical device according to the present invention (hereinafter may be referred to as the "present optical device") is provided with: a substrate; an optical element disposed on the substrate; and the present cured product that seals at least a portion of the optical element. The present optical device is preferably an optical semiconductor device. A suitable optical device and structure thereof are common, for example, with the optical device disclosed in Patent Document 1 (International Patent Publication WO2020/080348). Some or all of the composition and cured product used in various optical devices disclosed in Patent Document 1 can be replaced by the composition of the present invention or the present cured product and can be referred to as preferred embodiments in the present invention.

### [Optical Display]

The optical display according to the present invention (hereinafter referred to as the "present optical display") has the aforementioned laminate body, preferably further has one or more image display panels, and may also have one or more touch panels in addition thereto. A suitable type and structure of the present optical display are common, for example, with the optical display disclosed in Patent Document 1 (International Patent Publication WO2020/080348). Some or all of the composition and cured product used in various optical displays disclosed in Patent Document 1 can be replaced by the composition of the present invention or the present cured product and can be referred to as preferred embodiments in the present invention.

### INDUSTRIAL APPLICABILITY

The curable silicone composition of the present invention and the cured product thereof have high transparency and excellent adhesive strength, and are therefore suitable for use in optical displays and touch panels. In addition, the reaction does not proceed until ultraviolet light is applied, and a delayed reaction proceeds in areas that are not directly exposed to ultraviolet light as compared to areas that are directly exposed, making this method applicable to a variety of processes. After curing, sufficient adhesive strength is exhibited, not only to glass but also to substrates such as polarizing plates, enhancing use as an adhesive or pressure-sensitive adhesive for use in display devices such as optical displays (including touch panels) and optical semiconductor devices (including Micro LEDs). Furthermore, the composition of the present invention is expected to exert the same effect not only on the surface-coated polarizing plate, but also on substrates such as acrylic, which are similar to the surface coating material. Furthermore, the cured product of the present invention has excellent heat resistance, cold resistance, and excellent adhesive strength, as well as excellent transparency and is less likely to yellow even under high temperature conditions, and is therefore extremely useful as an OCR layer or optical adhesive layer for use in display devices such as displays and the like (particularly, but not limited to, in-vehicle displays and displays of aircraft and the like that include curved surfaces).

### EXAMPLES

The present invention will be described in detail below based on examples, but the present invention is not limited to the examples. Furthermore, measurements and evaluations in the examples were conducted as follows. The resulting cured product was confirmed to be transparent by visual inspection.

### [Viscosity of Composition]

The ultraviolet light curable silicone composition was placed on a rheometer (MCR301 manufactured by Anton Paar) set to a gap of 0.05 mm using a cone plate fixture with a diameter of 25 mm, and the viscosity of the composition before ultraviolet light irradiation was measured at a shear rate of d(gamma)/dt = 10/s.

### [Degree of Needle Penetration of Cured Product]

A petri dish was filled to a thickness of 10 mm or more of the curable silicone composition, and irradiated with ultraviolet light of 4000 mJ/cm² with a wavelength of 365 nm at 1300 mW/cm² using a UV-LED ultraviolet irradiation device (manufactured by JATEC Corporation), and then the composition was left in a 90°C oven for 30 minutes to cure, and then cooled to 25°C. Next, the penetration at 25°C was measured using a penetration measuring device (RPM-201 manufactured by Rigo Co., Ltd.).

### [Curing behavior of composition]

The ultraviolet-curable silicone composition was placed on a rheometer (MCR302, manufactured by Anton Paar) set to a gap of 0.1 mm using a parallel plate fixture with a diameter of 15 mm. Next, ultraviolet light with a wavelength of 365 nm was irradiated from a ultraviolet light source device (REX-250, manufactured by Asahi Spectroscopy) at approximately 90 mW/cm² to achieve 4000 mJ/cm², and the curing behavior was confirmed. The gelling time was measured as defined below.

Gelling time: the time from the start of light irradiation until the loss tangent (tan δ) at 25°C reaches 1

### [Shear adhesive strength and elongation of cured product to glass/glass]

The ultraviolet light curable silicone composition was filled between two glass plates (frosted glass produced by Paltek Co., Inc., 75 mm long x 25 mm wide x 2 mm thick) such that the dimensions of a cured silicone product were 200 mm² and 200 µm thick, and ultraviolet light with a 365 nm wavelength was irradiated to 4,000 mJ/cm² at 1300 mW/cm² using a UV-LED ultraviolet light irradiation device (manufactured by JATEC Co., Ltd.) to prepare a test piece containing a cured product interposed between the two glass plates. The test piece was subjected to a shear adhesion test in accordance with a method specified in JIS K6850, and the shear adhesive strength of the cured product was measured. At the same time, the ratio of the deformation at break to the thickness of the cured product was recorded as the elongation (%). Initial value measurements were taken three days after test piece preparation. Note that for the evaluation of adhesive strength and elongation, the results of measurement at a tensile rate of 100 mm/min for each test piece were used.

### [Shear adhesive strength and elongation of cured product to polarizing plate/glass]

A polarizing plate with an adhesive layer (manufactured by Sanritz, with a hard coat layer) was bonded to one side of a glass plate (75 mm long x 25 mm wide x 2 mm thick), and an ultraviolet light-curable silicone composition was filled between the polarizing plate and another glass plate so that the dimensions of the silicone cured product after curing was 200 mm² and 200 µm thick. Using a UV-LED ultraviolet light irradiation device (manufactured by JATEC), ultraviolet rays with a wavelength of 365 nm were irradiated from the glass surface at 1300 mW/cm² to achieve 4,000 mJ/cm², thereby creating a test piece containing the cured product sandwiched between the glass and the polarizing plate. The test piece was subjected to a shear adhesion test in accordance with a method specified in JIS K6850, and the shear adhesive strength of the cured product was measured. At the same time, the ratio of the deformation at break to the thickness of the cured product was recorded as the elongation (%). Initial value measurements were taken three days after test piece preparation. Note that for the evaluation of adhesive strength and elongation, the results of measurement at a tensile rate of 100 mm/min for each test piece were used.

### [Comparison of shear adhesive strength]

The shear adhesive strength to glass and the shear adhesive strength to a polarizing plate were compared using the following formula. (polarizing plate/glass shear adhesive strength)/(glass/glass shear adhesive strength)×100

### [Degree of yellowing of cured product]

A test piece in which the curable silicone composition was filled between two glass plates (75 mm long x 50 mm wide x 2 mm thick, Corning Incorporated, Eagle XG) such that the dimensions of a cured silicone product were 35 mm long x 35 mm wide x 1.5 mm thick was irradiated with ultraviolet light with a 365 nm wavelength to 4,000 mJ/cm² at 1300 mW/cm² using a UV-LED ultraviolet light irradiation device (manufactured by JATEC Co., Ltd.), and then placed in a 100°C oven for 500 hours. Therefore, it was removed from the oven and measured for degree of yellowing/YI (E313-96) on a CM-5 (manufactured by Konica Minolta, Inc.).

### [Examples 1 to 5, Comparative Examples 1 to 4]

The curable silicone compositions were prepared at the compositions (parts by weight) shown in Table 1 using the following components. In each structural formula, Me represents a methyl group and Vi represents a vinyl group.

The following components were used as component (A).
a1-1:ViMe₂SiO(SiMe₂O)₁₅₀OSiMe₂Vi
a1-2:ViMe₂SiO(SiMe₂O)₃₀₀OSiMe₂Vi
a1-3:ViMe₂SiO(SiMe₂O)₅₀₀OSiMe₂Vi
a1-4:ViMe₂SiO(SiMe₂O)₉₀₀OSiMe₂Vi
a1-5:ViMe₂SiO(SiMe₂O)₆₀OSiMe₂Vi

The following component was used as component (B).
b1-1: HMe₂SiO(SiMe₂O) ₂₄OSiMe₂H
b2-1: (HMe₂SiO_{1/2}) _{0.63}(SiO_{4/2}) _{0.37}

The following components were used as component (C).
c1-1: 1,6-bis(trimethoxysilyl) hexane
c2-1: glycidoxypropyltrimethoxysilane

The following components were used as component (D).
d1-1: Trimethyl(methylcyclopentadienyl)platinum (IV)

The following components were used as other optional components. Optional component-1: Dimethyl silicone oil with a viscosity of 100 mPa·s

Table 1: Composition of curable silicone composition (Examples)

**[Table 1]**

| | | Example 1 | Example 2 | Example 3 | Example 4 | Example 5 |
|---|---|---|---|---|---|---|
| A | a1-1 | 42.66 | 59.65 | 59.66 | 53.65 | |
| | a1-2 | | | | | 66.02 |
| | a1-3 | | 12.13 | 12.13 | 13.13 | 27.73 |
| | a1-4 | 40.68 | 19 | 18.99 | 19.00 | |
| | a1-5 | 0.178 | 0.198 | 0.198 | 0.198 | |
| B | b1-1 | 6.17 | 8.7 | 8.70 | 8.70 | 6.02 |
| | b2-1 | 0.27 | 0.27 | 0.27 | 0.27 | 0.19 |
| C | c1-1 | 0.05 | 0.05 | | 0.05 | 0.05 |
| | c2-1 | | | 0.05 | | |
| D | d1-1 | 0.00148 | 0.00164 | 0.00164 | 0.00164 | 0.00123 |
| Optional component-1 | | 10 | | | 5.00 | |
| Total | | 100.0 | 100.0 | 100.0 | 100.0 | 100.0 |
| SiH/Vi | | 1.23 | 1.22 | 1.22 | 1.33 | 1.33 |
| Pt content [ppm] | | 9 | 10 | 10 | 10 | 7.5 |
| Mass % of component (b1) in component (B) | | 96 | 97 | 97 | 97 | 97 |
| Viscosity at 25°C [mPa·s] | | 3817 | 1813 | 1790 | 1790 | 3065 |
| Degree of needle penetration | | 19 | 23 | 21 | 37 | 31 |
| Gelation time [min] | | 3.87 | 4.7 | 10.7 | 4.37 | 4.87 |
| (1) Glass/glass shear adhesive strength [MPa] | | 1.60 | 1.53 | 1.53 | 0.95 | 1.23 |
| (2) Shear adhesive strength of polarizing plate/glass [MPa] | | 1.39 | 1.47 | 1.42 | 1.16 | 1.21 |
| (2)/(1)×100[%] | | 86 | 96 | 93 | 122 | 99 |
| Glass/glass shear bond elongation [%] | | 1431 | 1499 | 1496 | 1569 | 1865 |
| Polarizing plate/glass shear adhesion elongation rate [%] | | 1521 | 1546 | 1622 | 1597 | 1932 |
| Initial YI of cured product (E313-96) | | 0.47 | 0.58 | 0.53 | 0.56 | 0.40 |
| YI after heating cured product at 100°C for 500 hours (E313-96) | | 0.71 | 0.86 | 0.97 | 0.87 | 0.62 |

Table 2: Composition of curable silicone composition (Comparative Examples)

**[Table 2]**

| | | Comparative example 1 | Comparative example 2 | Comparative example 3 | Comparative example 4 |
|---|---|---|---|---|---|
| A | a1-1 | | | | 59.70 |
| | a1-2 | 72.04 | 68.46 | 68.3 | |
| | a1-3 | 26.29 | 28.79 | 28.8 | 12.13 |
| | a1-4 | | | | 19.00 |
| | a1-5 | | | | 0.198 |
| B | b1-1 | 1.25 | 2.5 | 2.5 | 8.70 |
| | b2-1 | 0.375 | 0.2 | 0.2 | 0.27 |
| C | c1-1 | 0.05 | 0.05 | 0.2 | 0 |
| | c2-1 | | | | |
| D | d1-1 | 0.00123 | 0.00123 | 0.00328 | 0.00164 |
| Optional component-1 | | | | | |
| Total | | 100.0 | 100.0 | 100.0 | 100.0 |
| SiH/Vi | | 0.69 | 0.69 | 0.70 | 1.22 |
| Pt content [ppm] | | 7.5 | 7.5 | 20 | 10 |
| Mass % of component (b1) in component (B) | | 77 | 93 | 93 | 97 |
| Viscosity at 25°C [mPa·s] | | 3440 | 3380 | 3415 | 1810 |
| Degree of needle penetration | | 18 | 40 | 40 | 23 |
| Gelation time [min] | | 4.37 | 8.87 | 6.2 | 6.53 |
| (1) Glass/glass shear adhesive strength [MPa] | | 1.51 | 1.13 | 1.12 | 1.57 |
| (2) Shear adhesive strength of polarizing plate/glass [MPa] | | 0.61 | 0.16 | 0.16 | 0.79 |
| (2)/(1)×100[%] | | 41 | 14 | 14 | 50 |
| Glass/glass shear bond elongation [%] | | 1042 | 1518 | 1553 | 1493 |
| Polarizing plate/glass shear adhesion elongation rate [%] | | 1260 | 1676 | 1344 | 1316 |
| Initial YI of cured product (E313-96) | | 0.17 | 0.2 | 0.39 | 0.50 |
| YI after heating cured product at 100°C for 500 hours (E313-96) | | 0.92 | 1.2 | 2.3 | 0.85 |

As shown in Examples 1 to 5, the cured product of the present invention exhibited adhesive strength to the aforementioned polarizing plate, which is inherently poorly adhesive or prone to a decrease in adhesive strength due to curing inhibition, at a level that is equivalent to that of glass. **The** cured product exhibited sufficient shear adhesion elongation as an OCR, and further demonstrated little yellowing even after being left at a high temperature of 100°C for 500 hours.

On the other hand, in Comparative Examples 1 to 3 in which the SiH/Vi ratio of the composition was 1 or less, the adhesive strength between the polarizing plate and glass was significantly lower than the adhesive strength between glass and glass. Also, in Comparative Example 4, which did not contain component (C), the adhesive strength to the polarizing plate was significantly reduced as compared to glass. Furthermore, in Comparative Example 3, which contained a high amount of platinum catalyst, the cured product after 500 hours at 100 degrees showed a large degree of yellowing, and the optical stability was insufficient for use as an adhesive for display devices. When the amount of catalyst was increased in an attempt to avoid the problem of poor curing, yellowing occurred, and the product could not be used as a practical adhesive for display devices.

## Claims

1. A curable silicone composition, comprising:
(A) an organopolysiloxane having at least 2 alkenyl groups having 2 to 12 carbon atoms per molecule;
(B) the following components (b1) and (b2):
(b1) a linear organohydrogenpolysiloxane having a silicon-bonded hydrogen atom at both ends of a molecular chain;
(b2) an organohydrogenpolysiloxane having at least three silicon-bonded hydrogen atoms per molecule;
(C) one or more compounds selected from (c1) compounds having two or more alkoxysilyl groups in one molecule, and (c2) organic compounds having an alkoxysilyl group and an epoxy group in one molecule; and
(D) a platinum group metal catalyst activated by light having a wavelength of 200 to 500 nm,
wherein
the amount of component (B) is such that the amount of silicon-bonded hydrogen atoms in component (B) is 1 mol or more per mole of aliphatic unsaturated carbon-carbon bonds in component (A); and
the amount of platinum atoms in component (D) is in a range of 15 ppm or less relative to the sum of the components that form the non-volatile solid fraction as a result of the curing reaction of the curable silicone composition.

2. The curable silicone composition according to claim 1, wherein the amount of component (C) is within a range of 0.01 to 5 mass% relative to the total amount of the curable silicone composition.

3. The curable silicone composition according to claim 1, wherein the amount of component (b1) is 60 mass% or greater relative to the sum of components (b1) and (b2) in component (B).

4. The curable silicone composition according to claim 1, wherein component (A) contains at least one component selected from the following components (a1) and (a2):
(a1) a linear or partially branched organopolysiloxane having at least 2 alkenyl groups with 2 to 12 carbon atoms in a molecule; and
(a2) an organopolysiloxane having an alkenyl group expressed by average unit formula:
(R¹₃SiO_{1/2})ₐ(R¹₂SiO_{2/2})_{b}(R¹SiO_{3/2})_{c}(SiO_{4/2})_{d}
(where R¹ independently represents a monovalent hydrocarbon group with 1 to 12 carbon atoms, at least 1 mol% of R¹ is an alkenyl group with 2 to 12 carbon atoms, and a, b, c, and d satisfy all of the following conditions: (a + b + c + d = 1, 0 ≤ a ≤ 0.8, 0 ≤ b ≤ 0.4, 0 ≤ c ≤ 0.8, 0 ≤ d ≤ 0.6, 0.2 ≤ c + d ≤ 0.8).

5. The curable silicone composition of claim 1, wherein
component (B) contains the following components (b1-1) and (b2-1):
(b1-1) a linear organohydrogenpolysiloxane having silicon-bonded hydrogen atoms only at both ends of the molecular chain; and
(b2-1) an organohydrogenpolysiloxane as expressed by average unit formula:
(R²₃Sio_{1/2})ₑ(R²₂Sio_{2/2})_{f}(R²SiO_{3/2})_{g}(SiO_{4/2})ₕ
(where R² independently represents a hydrogen atom or a monovalent hydrocarbon group with 1 to 12 carbon atoms, excluding alkenyl groups, at least 1 mol% of R² is a hydrogen atom, and e, f, g, and h satisfy all of the following conditions: e + f + g + h = 1, 0 ≤ e ≤ 0.8, 0 ≤ f ≤ 0.4, 0 ≤ g ≤ 0.7, 0 ≤ h ≤ 0.5, 0.2 ≤ g + h ≤ 0.7)

6. The curable silicone composition according to any one of claims 1 to 5, wherein the viscosity of the composition at 25°C prior to ultraviolet light irradiation is 100,000 mPa or less.

7. The curable silicone composition according to any one of claims 1 to 6, which is an optical adhesive or an optical pressure sensitive adhesive.

8. The curable silicone composition according to claim 1, wherein the amount of silicon-bonded hydrogen atoms in component (B) is 1 mol to 4 mol per mole of aliphatic unsaturated carbon-carbon bonds in component (A).

9. A cured product of the curable silicone composition according to any one of claims 1 to 8.

10. The cured product according to claim 9, wherein the degree of needle penetration at 25°C is within a range of 5 to 70.

11. A laminate body, comprising an adhesive layer containing the cured product according to claim 9, provided between a first transparent or non-transparent optical member and a second transparent or non-transparent optical member.

12. An optical device, comprising:
a substrate;
an optical element disposed on the substrate; and
the cured product according to claim 9 that seals at least a portion of the optical element.

13. An optical display, comprising the laminate body according to claim 11.
